# EUROPÄISCHE PATENTANMELDUNG

(11) **EP 2 572 595 A2**
(43) Veröffentlichungstag der Anmeldung: **27.03.2013**
(21) Anmeldenummer: 12184003.7
(22) Anmeldetag: 12.09.2012
(51) Int. Cl.: A24B 9/00, A24C 5/34, G01N 22/00, G01N 22/02, G01N 22/04

(54) **Von einem Materialstrang durchsetztes Gehäuse eines Mikrowellenhohlraumresonator, bei dem elektronische Komponenten wie der Mikrowellengenerator in abgeschirmten Kammern des Gehäuses untergebracht sind**

(30) Priorität: 20.09.2011 DE 102011083049
(71) Anmelder: HAUNI Maschinenbau AG, 21033 Hamburg (DE)
(72) Erfinder: Buck, Jan, 21365 Adendorf (DE); Schröder, Dierk, 22399 Hamburg (DE); Behncke, Hans-Hermann, 25451 Quickborn (DE)
(74) Vertreter: Volmer, Jochen

(57) **Zusammenfassung**

Eine Mikrowellenstrangmessvorrichtung (20) zur Messung von Eigenschaften eines Materialstrangs oder mehrerer Materialstränge der Tabak verarbeitenden Industrie umfasst ein Gehäuse (20) mit wenigstens einem als Mikrowellenresonator (28) ausgebildeten Innenraum, der über Strangdurchtrittsöffnungen (27,27') von einem Materialstrang durchsetzbar ist und dem Mikrowellen zuführbar sind. Eine oder mehrere genauigkeitsbestimmende elektronische Komponenten (31, 32) sind im Gehäuse (20) angeordnet sind. Als genauigkeitsbestimmende elektronische Komponenten (31, 32) sind wenigstens ein Mikrowellengenerator und/oder wenigstens ein frequenzstabilisierter Oszillator und/oder Signalverarbeitungskomponenten und/oder Messelektronikkomponenten im Gehäuse (20) angeordnet. Das Gehäuse weist (21) ein oder mehrere voneinander in Bezug auf Mikrowellenstreufelder abgeschirmte Kammern (33, 34, 34', 36, 37) auf, in denen jeweils eine oder mehrere genauigkeitsbestimmende elektronische Messkomponenten (31, 32) angeordnet sind.

## Beschreibung

Die Erfindung betrifft eine Mikrowellenstrangmessvorrichtung zur Messung von Eigenschaften eines Materialstrangs oder mehrerer Materialstränge der Tabak verarbeitenden Industrie, umfassend ein Gehäuse mit wenigstens einem als Mikrowellenresonator ausgebildeten Innenraum, der durch einen Materialstrang durchsetzbar ist und dem Mikrowellen zuführbar sind, wobei das Gehäuse ein Material mit geringer Temperaturausdehnung aufweist und/oder eine Temperaturregeleinrichtung in und/oder am Gehäuse ausgebildet ist, mittels der die Temperatur des Gehäuses im Wesentlichen auf einem konstanten vorbestimmten oder vorbestimmbaren Wert haltbar ist. Die Erfindung betrifft ferner eine Maschine, insbesondere Strangmaschine, der Tabak verarbeitenden Industrie.

Die Erfindung betrifft insbesondere das Gebiet der Strangbildung und Strangverarbeitung in der Tabak verarbeitenden Industrie, also die Erzeugung von Zigarettensträngen und Filtersträngen in Strangmaschinen. Beispielsweise wird ein Zigarettenstrang erzeugt, indem zunächst Tabak auf einen Strangförderer aufgeschauert wird, der Tabakstrang mit einem Umhüllungspapierstreifen umhüllt wird und anschließend von dem Tabakstrang Zigaretten mehrfacher Gebrauchslänge abgelängt werden. Das Bilden des Tabak- oder Filterstrangs und das anschließende Schneiden bzw. Ablängen des Strangs erfolgt mit hoher Geschwindigkeit. Typisch sind bei heutigen Zigaretten- und Filterherstellungsmaschinen Stranggeschwindigkeiten von 10 m/s, wobei bei 100 mm Abschnittslänge ein Schnitttakt von 100 pro Sekunde folgt.

Die Qualität der Zigaretten hängt vom Zustand des Tabaks im Zigarettenstrang ab. Aus diesem Grund ist vorgesehen, die Feuchtigkeit und die Dichte des Tabaks im Zigarettenstrang zu messen und insbesondere die Dichte zu regeln. Weiterhin wird im Falle von plötzlichen und kurzzeitigen Signalschwankungen auf das Vorhandensein von Fremdkörpern geschlossen, wobei die entsprechenden Strangabschnitte nachfolgend ausgesondert werden.

Dies geschieht in modernen Zigarettenherstellungsmaschinen mit der Hilfe von Mikrowellenmesseinrichtungen, die wenigstens ein Mikrowellen-Resonatorgehäuse aufweisen, durch das der Tabakstrang hindurchgeführt wird.

Ein solches Resonatorgehäuse ist aus DE 198 54 550 B4 bekannt, dessen Offenbarung in dieser Patentanmeldung vollinhaltlich aufgenommen sein soll. Das dort gezeigte Resonatorgehäuse für Mikrowellen wird von einem Strang der Tabak verarbeitenden Industrie durchsetzt und besteht aus einem metallischen Material. Dem Resonatorgehäuse sind zwecks Erfassung der Masse und/oder der Feuchte des Strangmaterials Mikrowellen zuführbar. Dieses Gehäuse weist eine Temperaturregelanordnung mit einem Fühler für die Temperatur des Gehäuses und einem Heiztransistor auf, wobei der Fühler den Heiztransistor derart steuert, dass dessen Verlustwärme die Temperatur des Gehäuses zumindest annähernd konstant über der Umgebungstemperatur hält. Alternativ oder zusätzlich dazu kann das metallische Material auch einen niedrigen Temperaturausdehnungskoeffizienten aufweisen.

Ein weiteres Resonatorgehäuse ist in DE 10 2004 017 597 B4 offenbart, dessen Offenbarung ebenfalls in dieser Patentanmeldung vollinhaltlich aufgenommen sein soll. Darin ist ein Resonatorgehäuse mit einem Resonatorraum in Form eines Hohlzylinders offenbart, der symmetrisch zum Zigarettenstrang angeordnet ist. Es sind eine Einkopplungsantenne und eine Auskopplungsantenne vorgesehen, mit deren Hilfe ein Mikrowellensignal zur Anregung einer Schwingung im Resonatorraum eingekoppelt wird und ein transmittierter Teil wieder ausgekoppelt wird. Dieses Resonatorgehäuse besteht im Wesentlichen aus Zerodur^{®}, das einen sehr niedrigen Temperaturausdehnungskoeffizienten besitzt. Die Innenwände des Resonatorgehäuses sind mit Gold beschichtet.

Die Messung mittels eines Mikrowellenresonators, etwa gemäß DE 198 54 550 B4 oder DE 10 2004 017 597 B4, nutzt den physikalischen Umstand, dass die Resonanzkurve des Mikrowellenfeldes sich im Mikrowellenresonator bei Anwesenheit eines Materialstrangs im Mikrowellenresonator ändert. Im Grundsatz wird die komplexe Dielektrizitätskonstante des durch den Resonator geführten Materialstranges gemessen. Die komplexe Dielektrizitätskonstante weist einen Realteil und einen Imaginärteil bzw. einen Betrag und eine Phase auf. In den beiden Kennwerten der komplexen Dielektrizitätskonstanten sind die Informationen der Dichte und des Wassergehalts des Stranges enthalten. Veränderungen von Dichte oder Wassergehalt führen zu den charakteristischen Veränderungen der beiden Kennwerte und damit der Resonanzkurve des Mikrowellenresonators.

Gegenüber dem unbeladenen Mikrowellenresonator verschiebt sich das Maximum bzw. Minimum einer Resonanzkurve bei Anwesenheit eines Strangmaterials hin zu niedrigen Frequenzen. Außerdem verbreitert sich die Resonanzkurve. Änderungen der Dichte und Änderungen der Feuchte des Materialstrangs erzeugen jeweils eigene spezifische Veränderungen der Position, Höhe und Breite der Resonanzkurve. Wenn wenigstens zwei Messgrößen der Resonanzkurve gemessen werden, können daher die Dichte und die Feuchte im Rahmen der Messgenauigkeit und der Korrelationen der funktionalen Abhängigkeiten der Messwerte von Strangdichte und Strangfeuchte unabhängig voneinander bestimmt werden.

Beide bekannten Resonatorgehäuse tragen dem Erfordernis hoher Messstabilität Rechnung, indem eine temperaturunabhängige Geometriekonstanz des Mikrowellenresonators dadurch erzielt wird, dass das Resonatorgehäuse jeweils aus einem Material mit geringem Temperaturausdehnungskoeffizienten besteht und/oder eine Temperaturregelung verwirklicht wird. Damit werden Änderungen der Abmessungen und Veränderungen der Positionen von Bauteilen im Resonatorgehäuse, die einen unmittelbaren Einfluss auf das Messergebnis haben, vermindert.

Ausgehend von diesem Stand der Technik liegt der vorliegenden Erfindung die Aufgabe zugrunde, eine Mikrowellenstrangmessvorrichtung und eine Maschine der Tabak verarbeitenden Industrie, insbesondere Strangmaschine, anzugeben, mit denen eine Messung von Eigenschaften eines Materialstrangs der Tabak verarbeitenden Industrie noch genauer als bisher möglich wird.

Diese Erfindung wird durch eine Mikrowellenstrangmessvorrichtung zur Messung von Eigenschaften eines Materialstrangs oder mehrerer Materialstränge der Tabak verarbeitenden Industrie, gelöst, umfassend ein Gehäuse mit wenigstens einem als Mikrowellenresonator ausgebildeten Innenraum, der durch einen Materialstrang durchsetzbar ist und dem Mikrowellen zuführbar sind, die dadurch weitergebildet ist, dass eine oder mehrere genauigkeitsbestimmende elektronische Komponenten im Gehäuse angeordnet sind.

Bei den zu messenden Eigenschaften handelt es sich insbesondere um eine Feuchte, Dichte und/oder Masse des Strangmaterials, um eine Feuchte, Dichte und/oder Masse eines Zusatzstoffes und/oder einer Masse und/oder Position von im Strang eingebetteten Elementen. Im Strang eingebettete Elemente können Fremdkörper sein, die zu einem Ausschuss von Strangabschnitten oder daraus abgelängten Materialstäben führen, oder Elemente, die dem Materialstrang im Herstellungsprozess hinzugefügt worden sind. Das Strangmaterial ist ein Tabakstrang oder ein Filterstrang.

Die Erfindung beruht auf dem Grundgedanken, dass weitere mögliche Maßnahmen zur Stabilisierung der Mikrowellenstrangmessvorrichtung umgesetzt werden und Einflüsse ausgeschaltet werden, die die Stabilität negativ beeinflussen können und deshalb zu einer Beeinträchtigung der Messgenauigkeit führen würden. Dies betrifft erfindungsgemäß die genauigkeitsbestimmenden elektronischen Komponenten, die ebenfalls externen Störeinflüssen ausgesetzt sind. Diese weiteren Maßnahmen können auch zusätzlich zu einer passiven oder aktiven Bewahrung der Geometrie des Mikrowellenresonators, beispielsweise durch aktive Temperaturregelung, eingesetzt werden.

Im Stand der Technik gemäß DE 198 54 550 B4 und DE 10 2004 017 597 B4 ist der Resonator von der primären Messschaltung getrennt, beispielsweise von Messdioden in einem Diodenblock. Weiterhin weisen die verschiedenen Komponenten unterschiedliche Materialien mit unterschiedlichen Temperaturausdehnungskoeffizienten auf. Bei Temperaturänderungen führt dies zu mechanischen Spannungen. Solche Effekte bewirken Setzerscheinungen, die im Laufe des Betriebs der Messeinrichtung zu Genauigkeitseinbußen führen.

Durch die Kräfte, die beispielsweise durch Schraubverbindungen verursacht werden, treten daher im Laufe der Zeit infolge von Maschinenvibrationen Setzerscheinungen oder Drift auf, die zu einer Lageveränderung der Sonden, also der Einkopplungsantennen und Auskopplungsantennen, relativ zum Resonatorgehäuse führen. Außerdem dehnen sich infolge der Temperaturdifferenz zwischen der Montage bei Raumtemperatur und im Betrieb bis zu ca. 65 °C Resonator und ein Diodenblock um mehrere hundertstel Millimeter unterschiedlich aus, was an den Verbindungsstellen entsprechende mechanische Spannungen zur Folge hat, die ebenfalls zu Setzerscheinungen bzw. Drift führen.

Demgegenüber vermeidet die erfindungsgemäße Mikrowellenstrangmessvorrichtung diese Nachteile dadurch, dass ein konsequenter Aufbau mit weitgehender Integration der Messkomponenten in das Resonatorgehäuse stattfindet. Abweichend von der bisherigen Aufbautechnik wird auf eine mechanische Trennung von Resonator und primären Messkomponenten vollständig verzichtet. Stattdessen werden genauigkeitsbestimmende Komponenten in einem gemeinsamen Gehäuse untergebracht. Hierdurch werden Setzerscheinungen prinzipiell vermieden, die ihre Ursache in der Fügestelle von Resonator und primären elektronischen Komponenten, insbesondere Messkomponenten, haben.

Insofern elektronische Komponenten im Gehäuse integriert sind und einen anderen Temperaturausdehnungskoeffizienten aufweisen als das Gehäuse selbst, ist die Verbindung dieser Komponenten mit dem Gehäuse dergestalt, dass unterschiedliche Wärmeausdehnungen durch die Weichheit der Verbindung ausgeglichen werden und nicht zu einer Verspannung und Verformung des Gehäuses selbst führen. Gleichzeitig betrifft durch diese Anordnung eine erfindungsgemäß ebenfalls mögliche Temperaturregelung, d.h. eine Konstanthaltung der Temperatur, nicht nur das Gehäuse, sondern auch die darin angeordnete Messelektronik, was wiederum eine Konstanz der Arbeitsweise der elektrischen Komponenten sicherstellt und hilft, Drift zu vermeiden.

Vorzugsweise sind als genauigkeitsbestimmende elektronische Komponenten wenigstens ein Mikrowellengenerator und/oder wenigstens ein frequenzstabilisierter Oszillator und/oder Signalverarbeitungskomponenten und/oder Messelektronikkomponenten im Gehäuse angeordnet. Somit sind als elektronische Komponenten sowohl mikrowellenerzeugende Komponenten als auch Messkomponenten umfasst.

Vorteilhafterweise weist das Gehäuse ein oder mehrere voneinander in Bezug auf Mikrowellenstreufelder abgeschirmte Kammern auf, in denen jeweils eine oder mehrere genauigkeitsbestimmende elektronische Messkomponenten angeordnet sind. Da bei den hohen Frequenzen der Mikrowellentechnik bereits kleinste Streukapazitäten zwischen Signalführungsleitern eine starke gegenseitige Beeinflussung zur Folge haben, wird durch die Kammern eine gegenseitige Beeinflussung verschiedener elektronischer Komponenten weitgehend unterdrückt. So wird die mit der Streuung einhergehende negative Beeinflussung der Messgenauigkeit durch diese Maßnahme dadurch erheblich eingeschränkt, dass die primären Messschaltungskomponenten in einer Kammer bzw. in jeweils einzelnen Kammern untergebracht werden, die die Übertragung auf die Schaltungskomponenten in benachbarten Kammern weitgehend verhindern. So wird vorzugsweise beispielsweise die Einheit, mit der Mikrowellen generiert werden, von den Messeinheiten und Auswerteeinheiten in getrennten Kammern abgeschirmt.

Wenn vorzugsweise das Gehäuse einen Grundkörper und einen ersten Deckel umfasst, die zu dem Gehäuse zusammensetzbar sind, wobei insbesondere weiter eine Abdeckung für genauigkeitsbestimmende elektronische Komponenten umfasst ist, die in einer Aufnahme im ersten Deckel angeordnet ist, ist eine einfach herzustellende und kompakte Bauweise des Gehäuses verwirklicht. Der Grundkörper und der erste Deckel bzw. insbesondere auch die Abdeckung sind auf einfache Weise herstellbar und miteinander verbindbar.

Ebenfalls vorzugsweise ist oder sind die Kammer oder die Kammern als Aussparungen im ersten Deckel und/oder in der Abdeckung und/oder im Grundkörper ausgebildet, wobei zwischen den Kammern und/oder zwischen der Kammer und dem Mikrowellenresonator Zwischenwände angeordnet sind. Die Zwischenwände kapseln die einzelnen Kammern und damit die darin angeordneten elektrischen und/oder elektronischen Komponenten voneinander ab und verhindern so eine gegenseitige Beeinflussung bzw. ein Übersprechen von Signalen.

In einer vorteilhaften Ausbildung sitzt die Abdeckung auf wenigstens einer Grundplatine mit elektrischen und/oder elektronischen Bauteilen auf und die Kammern sind zwischen der Grundplatine und der Abdeckung, dem ersten Deckel und/oder dem Grundkörper ausgebildet. Die Abdeckung sitzt vorzugsweise auf einer Massebasis der Grundplatine auf.

Weiter vorzugsweise sind Spalte und/oder Freiflächen zwischen den Zwischenwänden im Grundkörper und dem ersten Deckel oder der Abdeckung gegen HF-Strahlung abgedichtet, insbesondere mittels einer als, insbesondere abbindender, HF-Paste aufgetragenen Dichtung, einer HF-Dichtungsschnur oder mittels HF-O-Ringen.

In einer vorteilhaften Weiterbildung weist der Grundkörper wenigstens eine Kammer auf, in der insbesondere eine Spannungsversorgung und/oder eine Temperaturregeleinrichtung angeordnet sind, und/oder eine Temperaturregeleinrichtung am Gehäuse angeordnet ist, wobei mittels der Temperaturregeleinrichtung in oder am Gehäuse die Temperatur des Gehäuses im Wesentlichen auf einem konstanten vorbestimmten oder vorbestimmbaren Wert haltbar ist. Damit sind auch weitere für den Betrieb und die Versorgung sowohl des Mikrowellenresonators als auch der Generatorkomponenten und der Messkomponenten in die erfindungsgemäße Mikrowellenstrangmessvorrichtung integriert und bilden eine kompakte Einheit.

Durch die Kompaktheit der Mikrowellenstrangmessvorrichtung werden außerdem lange Signallaufwege, Kabelverbindungen, zusätzliche Verbindungsstellen und weitere Schwachstellen im Signalverlauf eingespart, so dass auch durch die Einsparung an Kontaktstellen die Signalqualität und die Messqualität erhöht wird.

Weiter vorzugsweise ist ein zweiter Deckel auf dem Grundkörper angeordnet, der die wenigstens eine Kammer im Grundkörper abschließt. Ein solcher zweiter Deckel schließt den Grundkörper auf der dem ersten Deckel gegenüberliegenden Seite ab und dient auch einem mechanischen Schutz der im Grundkörper angeordneten elektrischen und elektronischen Komponenten.

Vorteilhafterweise sind im Grundkörper oder im ersten Deckel zwei oder mehr Ebenen von Kammern angeordnet. Dies dient einer weiteren Kompaktifizierung der Vorrichtung. Es ist auch möglich, Kammern in verschiedenen Ebenen im Grundkörper und im ersten Deckel anzuordnen. So ist es beispielsweise erfindungsgemäß umfasst, in einer Kammer in einer Ebene im ersten Deckel einen Teil einer Auswerteelektronik anzuordnen, während in einer weiteren Kammer, die in einer weiteren Ebene im ersten Deckel oder im Grundkörper darüber einen weiteren Teil der Mess- und gegebenenfalls auch der Auswerteelektronik anzuordnen. Es ist hierbei ausdrücklich erfindungsgemäß umfasst, dass die mehreren Ebenen von Kammern nur im Grundkörper, nur im ersten Deckel oder auf den Grundkörper und den ersten Deckel verteilt angeordnet sind.

Vorzugsweise schließt ein Resonatordeckel den Mikrowellenresonator, der als Hohlraum im Grundkörper ausgebildet ist, zu einer Seite hin ab, wobei insbesondere der Resonatordeckel Teil des zweiten Deckels ist oder in einer Aussparung des zweiten Deckels angeordnet ist.

Vorteilhafterweise weisen der Grundkörper und der erste Deckel, insbesondere auch die Abdeckung, insbesondere auch der zweite Deckel, ein oder mehrere Materialien mit im Wesentlichen gleicher, insbesondere geringer, Temperaturausdehnung auf, wobei insbesondere ein Temperaturausdehnungskoeffizient des oder der Materialien einen Wert von 25*10⁻⁶ K⁻¹ nicht übersteigt, insbesondere im Wesentlichen kleiner ist als 2,5*10⁻⁶ K⁻¹, insbesondere kleiner als 0,1*10⁻⁶ K⁻¹. Das Material Invar hat beispielsweise einen Temperaturausdehnungskoeffizienten von etwa 2,0*10⁻⁶ K⁻¹. Die Glaskeramik Zerodur^{®} hat einen Temperaturausdehnungskoeffizienten von weniger als 0,1*10⁻⁶ K⁻¹.

Bei Verwendung eines nichtleitenden Kunststoffmaterials, glaskeramischen Materials oder keramischen Materials sind die Wandflächen innerhalb des Mikrowellenresonators und der Kammern mit einer metallischen Schicht, beispielsweise Gold, überzogen, um die Ausbreitung von Mikrowellen nach außerhalb des Resonators bzw. der Kammern zu verhindern.

Wegen ihrer guten spanenden Bearbeitungsmöglichkeiten werden auch Aluminium und einige wärmebeständige Kunststoffe mit einem relativ geringen Temperaturausdehnungskoeffizienten, wie beispielsweise Polyetheretherketon (PEEK) oder Polybenzimidazol (PBI) als bevorzugtes Material für das Gehäuse vorgeschlagen. Aluminium hat beispielsweise einen Temperaturausdehnungskoeffizienten von 23,8*10⁻⁶ K⁻¹, für PEEK werden von den Herstellern Werte von 17*10⁻⁶ K⁻¹ bis 25*10⁻⁶ K⁻¹ angegeben. Auch PBI hat einen vergleichbaren Temperaturausdehnungskoeffizienten von 25*10⁻⁶ K⁻¹. Eine Kombination der genannten Werkstoffe Aluminium, PEEK und PBI ist für bestimmte Anwendungsfälle aufgrund der sehr ähnlichen Temperaturausdehnungskoeffizienten ebenfalls vorteilhaft, beispielsweise bei einer gegebenenfalls notwendigen Kombination von leitenden und nichtleitenden Materialien.

Eine weitere Verbesserung der Temperaturkonstanz ist gegeben, wenn das Gehäuse ein gut wärmeleitendes Material aufweist oder von einem gut wärmeleitenden Material umgeben ist. Ein gut wärmeleitendes Material ist beispielsweise Aluminium. Das gut wärmeleitende Material dient der Übertragung und dem Ausgleich von Wärme bzw. der Temperatur des Gehäuses und der darin aufgenommenen elektronischen Komponenten. Andererseits ist beispielsweise Zerodur^{®} ein schlecht wärmeleitfähiges Material, so dass ein aus Zerodur^{®} hergestelltes Gehäuse für einen Temperaturausgleich ein gut wärmeleitendes Material beinhalten oder davon umgeben sein kann.

Um Verformungen des Gehäuses, auch aufgrund externer Einflüsse, zu minimieren, ist das Gehäuse im Wesentlichen an mechanisch weichen Verbindungselementen, insbesondere Schrauben, Bolzen oder Stehbolzen, aufgehängt, die thermische und/oder mechanische Verspannungen aufnehmen.

Vorzugsweise weist ein Schutzrohr aus einem nichtleitenden Material, insbesondere Kunststoff, insbesondere PEEK, durch den der Materialstrang durch den Mikrowellenresonator führbar ist, innerhalb der Messzone und/oder im Gehäuse eine geringere Wandstärke auf als außerhalb des Gehäuses und/oder ist im Gehäuse enger toleriert als außerhalb des Gehäuses. Ein solches Schutzrohr wird auch als Tubus bezeichnet. Für die Verwendung von PEEK spricht neben seiner Eigenschaft als Nichtleiter auch die hohe Temperaturbeständigkeit. Da das Schutzrohr mit dem Tabakstrang oder Filterstrang während deren Herstellung in Berührung kommen kann, spricht für die Verwendung von PEEK ferner, dass dieser Kunststoff in einigen Varianten der Richtlinie der Europäischen Union für Kunststoffe mit Lebensmittelkontakt und den entsprechenden Vorgaben der U.S. FDA (US-amerikanische Food and Drug Administration) entspricht.

Vorzugsweise besteht das Schutzrohr aus einem nichtleitenden Material mit kleiner Dielektrizitätskonstante und geringem Verlustfaktor, das insbesondere für HF-Strahlung weitgehend transparent ist. Dies ist bei PEEK ebenfalls erfüllt.

Da auch über den Tubus unzulässige Kräfte auf das Gehäuse übertragen werden können, ist vorzugsweise außerhalb des Gehäuses ein langes Stück des Tubus vorgesehen, das weit toleriert ist, so dass die Kräfte, die sich auf diesem Stück infolge von geringen Lageverschiebungen ergeben können, minimal sind. Die im Gehäuseinneren bzw. in der Messzone verringerte Wandstärke des Tubus erhöht die Empfindlichkeit der Mikrowellenmessung in diesem Bereich.

Eine weitere Verbesserung der Messkonstanz wird erreicht, wenn Messsonden, die in den Mikrowellenresonator hineinragen, in nichtleitenden Röhren oder Hülsen gelagert sind, die Mikrowellen durchlassend ausgebildet sind und an einer oder beiden Endflächen des Mikrowellenresonators an jeweils festen Positionen gelagert sind. In bisherigen Resonator-Anordnungen sind die Messsonden nur auf einer Seite der Resonatorinnenwand, beispielsweise in einem Kunststoffteil, mechanisch gelagert. Die auftretenden thermischen Spannungen können zu einer Verformung des Kunststoffteils führen und damit zu einer Veränderung der Position der Sonden im Resonatorraum und damit der Messcharakteristik. Wenn die Sonden bzw. Einkopplungsantennen und Auskopplungsantennen in Röhrchen oder Hülsen gelagert sind, die auf beiden Endflächen des Resonators in eineindeutig definierten Positionen fixiert sind, sind die Antennen in ihrer Lage eindeutig definiert. Die Stärke der Ankopplung der Sonden an den Resonator wird dabei von der Länge des Metallteils in den Röhrchen bestimmt, also von der Länge der Sonden. Ein bevorzugtes Material für solche Röhrchen oder Hülsen ist Quarz.

Vorteilhafterweise ist eine Position einer Durchtrittsöffnung für den Materialstrang im Gehäuse asymmetrisch und parallel zu zwei Außenseiten des Gehäuses ausgebildet, wobei insbesondere der Abstand der Mittellängsachse der Durchtrittsöffnung zu wenigstens einer Außenseite des Gehäuses weniger als 24 mm, insbesondere weniger als 20 mm beträgt. Diese Ausgestaltung eignet sich besonders gut für Doppelstrangmaschinen, bei denen die beiden parallelen Materialstränge im Abstand von wenigen Zentimetern nebeneinander her gefördert werden.

Der Aufbau des erfindungsgemäßen Systems erlaubt den Einsatz sowohl in Einstrangmaschinen als auch in Doppelstrangmaschinen oder Mehrstrangmaschinen, so dass nur noch eine Mikrowellenstrangmessvorrichtung für alle Maschinentypen benötigt wird.

Durch den neuen erfindungsgemäßen Aufbau wird im Vergleich zum Stand der Technik eine höhere Systemstabilität erreicht. Hierdurch müssen Korrekturen der Messkalibrierung sowie Reparaturen seltener durchgeführt werden. Außerdem wird die Messgenauigkeit verbessert. Durch die höhere Stabilität und die selteneren Ausfälle werden die Betreuungskosten reduziert. Durch eine Standardisierung werden außerdem Konstruktions- und Serienbetreuungskosten reduziert.

Die der Erfindung zugrunde liegende Aufgabe wird auch durch eine Maschine der Tabak verarbeitenden Industrie, insbesondere Strangmaschine, insbesondere Tabakstrangmaschine oder Filterstrangmaschine, mit wenigstens einer erfindungsgemäßen zuvor beschriebenen Mikrowellenstrangmessvorrichtung gelöst. Die mit der erfindungsgemäßen Mikrowellenstrangmessvorrichtung einhergehenden Vorteile gelten auch für die erfindungsgemäße Maschine der Tabak verarbeitenden Industrie.

Bezüglich der Anordnung mehrerer erfindungsgemäßer Mikrowellenstrangmessvorrichtungen ist vorzugsweise vorgesehen, dass die Maschine wenigstens zwei Mikrowellenstrangmessvorrichtungen aufweist, wobei die Mikrowellenstrangmessvorrichtungen unmittelbar hintereinander angeordnet sind und die Durchtrittsöffnungen der Mikrowellenstrangmessvorrichtungen für den Materialstrang fluchtend zueinander ausgerichtet sind, wobei die Betriebsfrequenzen der beiden Mikrowellenstrangmessvorrichtungen voneinander abweichen, insbesondere um wenigstens einen Faktor 2, oder wobei die Mikrowellenstrangmessvorrichtungen im Wesentlichen unmittelbar nebeneinander angeordnet sind und die Durchtrittsöffnungen der Mikrowellenstrangmessvorrichtungen für zwei Materialstränge parallel zueinander ausgerichtet sind und in einer, insbesondere horizontalen, Ebene angeordnet sind, wobei insbesondere die wenigstens zwei Mikrowellenstrangmessvorrichtungen mit derselben Frequenz betrieben werden.

Die erste Alternative betrifft die simultane und unabhängige Messung bei zwei Frequenzen an einem Strang einer Ein- oder Mehrstrangmaschine, die zweite Alternative den Einsatz in einer Doppel- oder Mehrstrangmaschine.

Ebenfalls vorteilhaft ist es, wenn die Maschine zur Herstellung von zwei Materialsträngen ausgebildet ist und vier Mikrowellenstrangmessvorrichtungen aufweist, wobei an jedem Materialstrang jeweils zwei Mikrowellenstrangmessvorrichtungen unmittelbar hintereinander angeordnet sind und die Durchtrittsöffnungen der Mikrowellenstrangmessvorrichtungen für den jeweiligen Materialstrang fluchtend zueinander ausgerichtet sind, wobei jeweils die Betriebsfrequenzen der beiden Mikrowellenstrangmessvorrichtungen an jeweils einem Materialstrang voneinander abweichen, insbesondere um wenigstens einen Faktor 2. Auf diese Weise ist es möglich, bei einer Doppel- oder Mehrstrangmaschine zu jedem einzelnen hergestellten Materialstrang zwei oder mehr Messungen bei verschiedenen Frequenzen simultan vorzunehmen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Zigarettenherstellungsmaschine des Typs "PROTOS" der Anmelderin,
- Fig. 2: eine schematische Perspektivansicht einer erfindungsgemäßen Mikrowellenstrangmessvorrichtung,
- Fig. 3: eine schematische Querschnittsdarstellung durch eine erfindungsgemäße Mikrowellenstrangmessvorrichtung gemäß Fig. 2,
- Fig. 4: eine schematische Perspektivdarstellung der erfindungsgemäßen Mikrowellenstrangmessvorrichtung gemäß Fig. 2 und
- Fig. 5: eine schematische Detaildarstellung einer erfindungsgemäßen Mikrowellenstrangmessvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

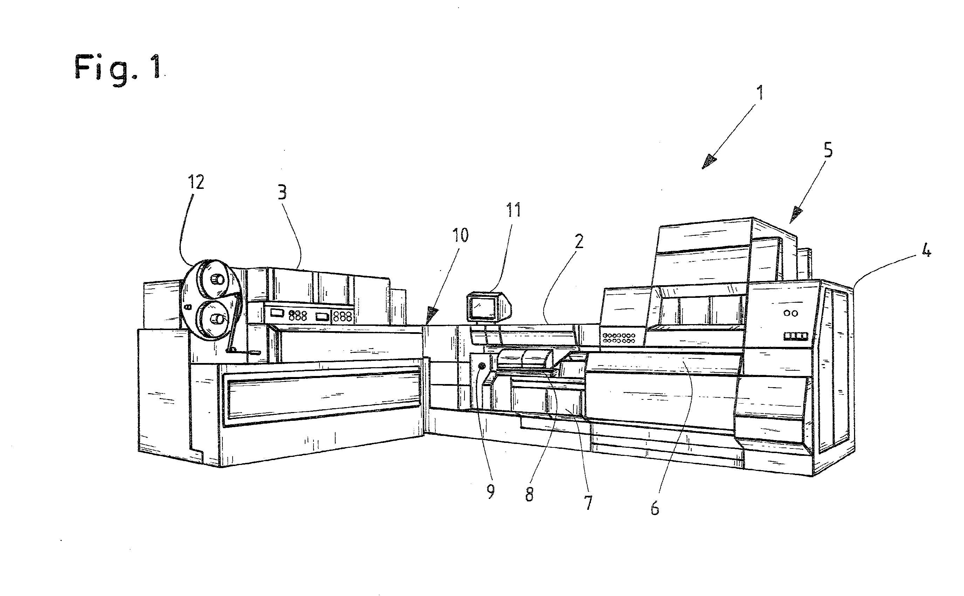

In Fig. 1 ist eine Zweistrang-Zigarettenherstellungsmaschine des Typs "PROTOS" aus dem Hause der Anmelderin schematisch dargestellt, die in einer "L-förmigen" Konfiguration aus einer Zweistrangmaschine 2 und einer Filteransetzmaschine 3 zusammengesetzt ist. In Fig. 1 ist die Maschine 1 mit geschlossenen Verdeckblechen dargestellt, Einzelheiten sind der Übersichtlichkeit halber nicht dargestellt.

Im Folgenden werden einige Stationen der Zigarettenherstellung übersichtsmäßig vorgestellt. Der Herstellungsprozess zweier endloser Tabakstränge beginnt in der Zweistrangmaschine 2 in einer zweisträngigen Verteilereinheit 4 mit einem Vorverteiler 5, der unter anderem einen Steilförderer und zwei Stauschächte sowie weitere bekannte Komponenten umfasst. Darin wird loses Tabakmaterial zu einem ersten und einem parallel verlaufenden zweiten Strangförderer 6 gefördert und von unten auf die Strangförderer aufgeschauert, so dass sich zwei Tabakstränge ausbilden, die mittels Saugluft an den Strangförderern gehalten werden. An den Strangförderern 6 hängend wird das Tabakmaterial in Richtung auf eine erste und eine zweite Formateinheit 8 gefördert. Dort werden die noch offenen Tabakstränge jeweils in einer Umhüllungspapiereinheit 7 mit Umhüllungspapierstreifen umwickelt, die an einer Längskante beleimt werden. Anschließend werden die Tabakstränge in den beiden Formateinheiten 8 zu zwei endlosen geschlossenen Tabaksträngen mit rundem Querschnitt geformt und die Verleimung der Umhüllungspapierstreifen verfestigt.

Nach der Formung der Tabakstränge werden diese durch eine Messvorrichtung 9 mit einer oder mehreren Messeinheiten zur Messung von Eigenschaften des jeweiligen Tabakstrangs geführt. So wird etwa das Umhüllungspapier optisch inspiziert und die Strangfeuchte und -dichte gemessen. Die Steuerung der Zweistrangmaschine 2 erfolgt von einer Steuerkonsole 11 aus.

Ausgangs der Zweistrangmaschine 2 befindet sich eine Messer- und Übergabeeinheit 10, in der die Stränge in einzelne Tabakstöcke mehrfacher Gebrauchslänge abgelängt werden, die einzelnen Tabakstöcke von einer längsaxialen in eine queraxiale Förderung umgelenkt werden und in die Filteransetzmaschine 3 überführt werden. Die Filteransetzmaschine 3 weist unter anderem auch eine Belagpapiereinheit 12 auf, von der Belagpapier abgezogen, geschnitten und beleimt wird. Nachfolgend werden die einzelnen Belagpapierblättchen in vorgesehenen Bereichen um die Tabakstöcke und Doppeltfilterstopfen gewickelt, die dadurch miteinander verbunden werden. Abschließend werden die so produzierten Doppelzigaretten mittig geschnitten und einzeln abgefördert.

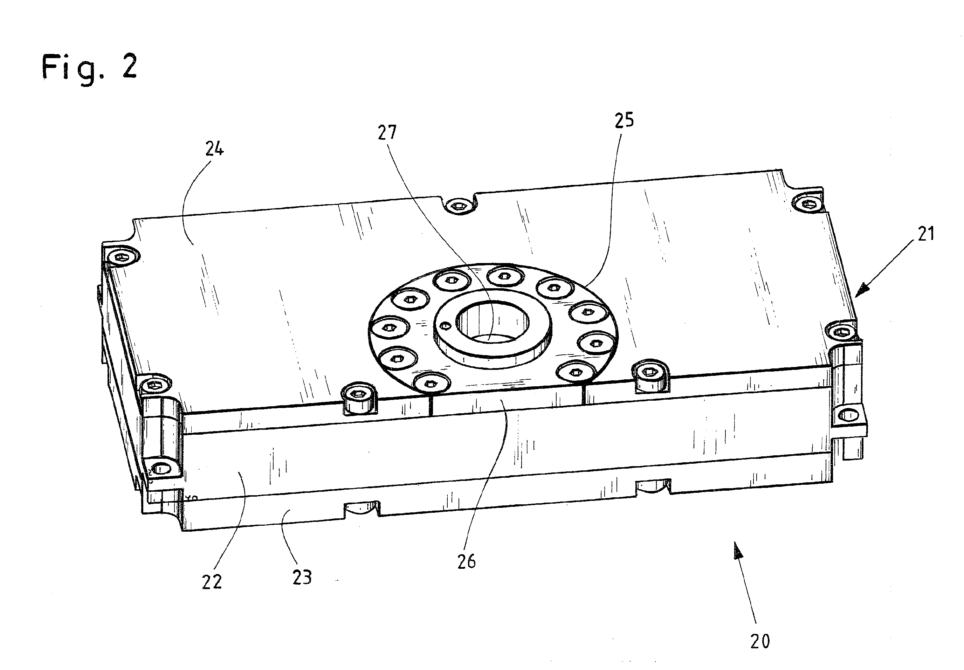

Fig. 2 zeigt schematisch in einer Perspektivdarstellung eine erfindungsgemäße Mikrowellenstrangmessvorrichtung 20, die an der Position der Messvorrichtung 9 der Maschine 1 aus Fig. 1 eingesetzt werden kann. Die Mikrowellenstrangmessvorrichtung 20 weist ein Gehäuse 21 auf, das aus einem Grundkörper 22, einem ersten Deckel 23 auf einer Seite und einem zweiten Deckel 24 auf der gegenüberliegenden Seite aufgebaut ist. Die Darstellung in Fig. 2 ist auf die Seite mit dem zweiten Deckel 24 gerichtet. Dieser weist eine kreisabschnittsförmige Aussparung 25 auf, in der ein Resonatordeckel 26 eingesetzt ist, der eine Strangdurchtrittsöffnung 27 aufweist. Im Grundkörper 22 befindet sich unterhalb des Resonatordeckels 26 der Mikrowellenresonator, der in Fig. 2 nicht dargestellt ist.

Die Deckel 23, 24 und der Grundkörper 22 sowie auch der Resonatordeckel 26 sind miteinander an mehreren Stellen verschraubt. Die einzelnen Deckel 23, 24 und der Grundkörper 22 bestehen vorzugsweise aus einem Material mit einem ähnlichen oder im Wesentlichen gleichen, insbesondere auch niedrigen, Temperaturausdehnungskoeffizienten.

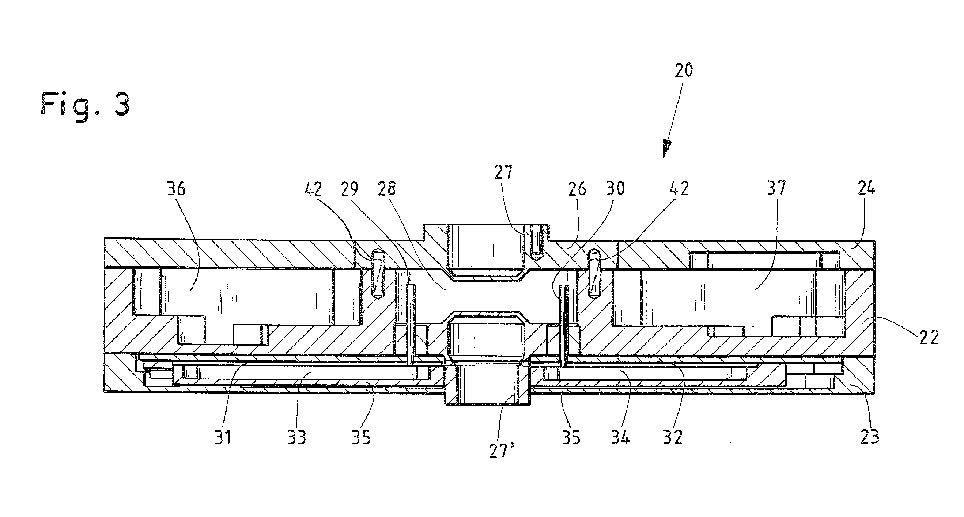

In Fig. 3 ist die Mikrowellenstrangmessvorrichtung 20 aus Fig. 2 im Querschnitt dargestellt. Der zweite Deckel 24 ist zuoberst, der erste Deckel 23 zuunterst dargestellt. Zentral verläuft ein Durchgang für einen Materialstrang der Tabak verarbeitenden Industrie, beispielsweise ein Zigarettenstrang. Der Materialstrang kann aber auch ein Filterstrang sein. Hierzu sind Strangdurchtrittsöffnungen 27, 27' vorgesehen. Ein durchgehendes Führungsrohr bzw. Schutzrohr für den Strang ist der Übersichtlichkeit halber nicht dargestellt. Neben der Führung des Stranges hat dieses Schutzrohr die weitere Funktion, den Innenraum des Mikrowellenresonators dicht abzuschließen, um jeglichen Eintritt von Papier-, Tabak- und/oder Staubpartikeln zu verhindern.

Ein zentraler Innenraum des Grundkörpers 22 ist als Mikrowellenresonator 28 ausgebildet, der durch den Resonatordeckel 26 abgeschlossen ist. Der Resonatordeckel 26 ist mit dem Grundkörper 22 durch Schrauben 42 verbunden.

Die in Fig. 3 unten dargestellte Seite des Grundkörpers 22 wird von einem ersten Deckel 23 abgeschlossen. Dieser weist eine Aussparung auf, in die eine Abdeckung 35 eingebracht ist. Die Abdeckung 35 schließt Kammern 33, 34 für Mikrowellengeneratorelektronik einerseits und für Mess- und Auswerteelektronik andererseits ein. Die entsprechende Elektronik ist der Übersichtlichkeit halber nicht im Detail dargestellt. Es sind jedoch in den Kammern 33, 34 an den Grundkörper 22 angrenzende Platinen 31, 32 für die Mikrowellengeneratorelektronik bzw. für die Mess- und Auswerteelektronik dargestellt. Diese Platinen 31, 32 können auch Teil einer einzigen Platine sein, auf die die Abdeckung 35 aufgesetzt ist. Da die Abdeckung 35 an ihren Rändern auf den Platinen 31, 32 aufsitzt, so sind die Kammern 33, 34 gegen Austritt bzw. Eintritt von Mikrowellensignalen abgekapselt.

Von der Platine 31 geht eine Einkopplungsantenne 29 durch den Grundkörper 22 in den Mikrowellenresonator 28 hinein. Auf der gegenüberliegenden Seite führt eine Auskopplungsantenne 30 wiederum durch den Grundkörper 22 aus dem Mikrowellenresonator 28 heraus, wo sie mit der Platine 32 für die Mess- und Auswerteelektronik verbunden ist.

In der dem zweiten Deckel 24 zugewandten Seite des Grundkörpers 22 sind Kammern 36, 37 für weitere Elektronikbauteile angeordnet, nämlich für eine Temperaturregelung und für eine Spannungsversorgung. Diese elektronischen Komponenten sind aus Gründen der Übersichtlichkeit ebenfalls nicht dargestellt. Die Anordnung der Temperaturregelung im Inneren des Gehäuses 21 hat den Vorteil, dass die Energie, die zur Heizung oder zur Abkühlung des Gehäuses aufgewendet werden muss, geringer ist als bislang üblich, da eine direkte Wärmeabstrahlung und Wärmeverlust nach außen durch die Temperaturregelungvorrichtung entfällt.

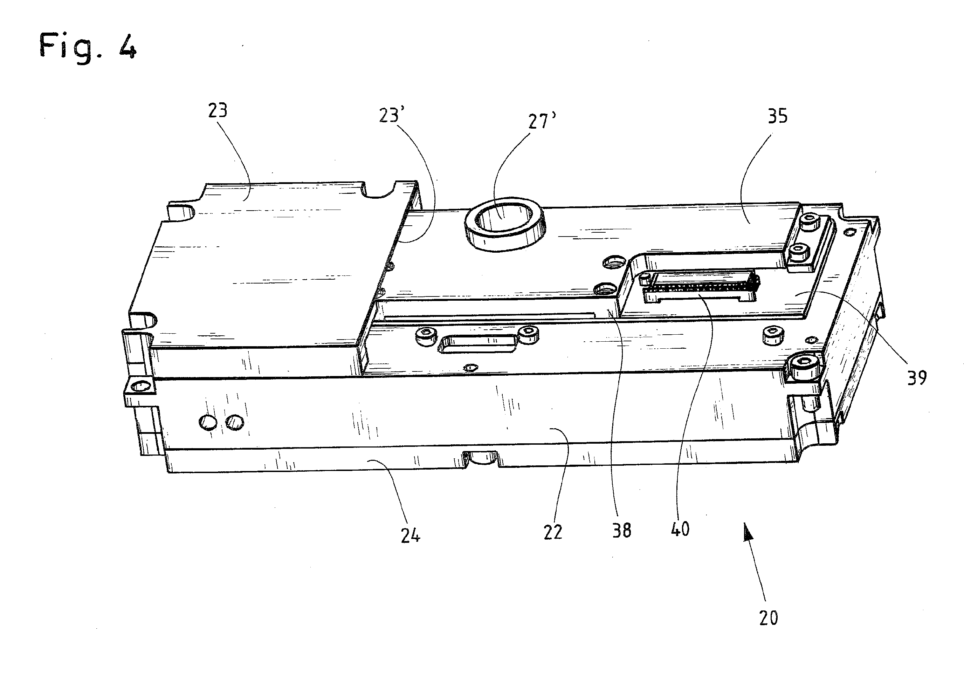

In Fig. 4 ist die erfindungsgemäße Mikrowellenstrangmessvorrichtung 20 gemäß Fig. 2 und Fig. 3 in einer weiteren perspektivischen Darstellung schematisch gezeigt, nämlich von der Seite des ersten Deckels 23 her. Hierzu ist, um Details des Innenlebens des Gehäuses 21 zu zeigen, der erste Deckel 23 nur teilweise dargestellt, so dass der Blick auf die elektronischen Komponenten freigegeben ist.

Auf der Seite der Elektronik für die Messung schließt sich an den Grundkörper 22 eine Grundplatine 39 an, auf der die Elektronik des Mikrowellengenerators und der Mess- und Auswerteelektronik angeordnet ist. Diese Komponenten sind durch eine Abdeckung 35 abgedeckt, die Kammern bildet, die die Elektronik beispielsweise für den Mikrowellengenerator einerseits und für die Mess- und Auswerteelektronik andererseits gegeneinander abschließt und abkapselt. Diese Abdeckung 35 weist Zwischenwände 38 auf, von denen eine in Fig. 4 beispielhaft gezeigt ist und die durch eine Paste, einen O-Ring oder andere geeignete Abdichtungsmittel so gegenüber der Grundplatine 39 abgedichtet ist, dass Mikrowellenstrahlung und Mikrowellensignale nicht aus der jeweiligen Kammer heraustreten und andere elektronische Komponenten stören.

Weitere Details sind ein Durchtritt für eine Strangdurchtrittsöffnung 27' sowie ein Konnektor 40 auf einem nicht abgeschirmten Teil der Grundplatine 39.

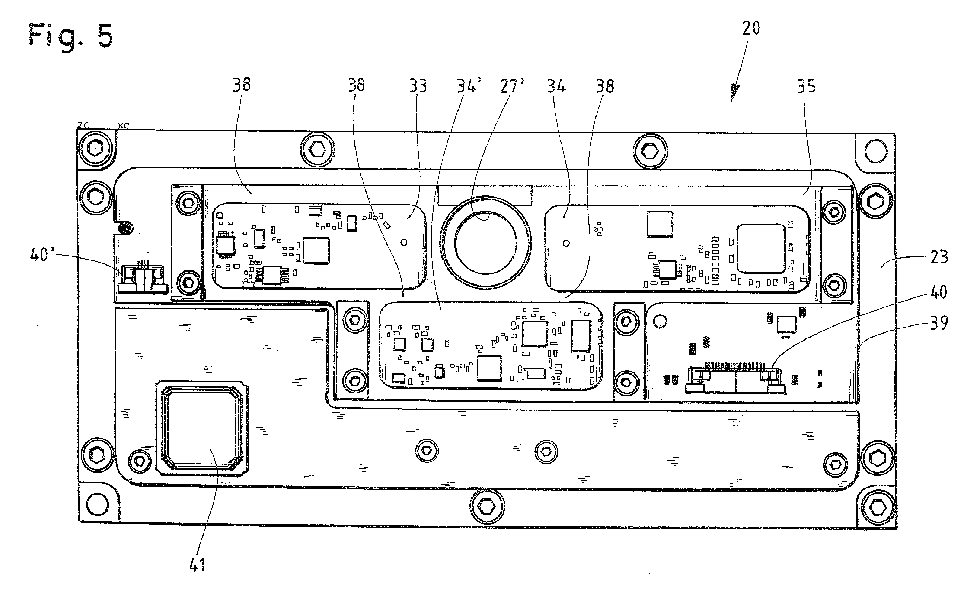

In Fig. 5 ist eine schematische Draufsicht auf die Grundplatine 39 im ersten Deckel 23 gemäß Fig. 4 gezeigt. Die Grundplatine 39 weist im zentralen oberen Teil die Strangdurchtrittsöffnung 27' auf, um die herum die Mikrowellengeneratorelektronik und die Mess- und Auswerteelektronik angeordnet ist. Diese sind durch die Abdeckung 35 in drei Kammern 33, 34, 34' unterteilt, die um die Strangdurchtrittsöffnung 27' herum gruppiert sind und jeweils gegeneinander abgekapselt sind. Im nicht von der Abdeckung 35 überdeckten Bereich der Grundplatine 39 sind zwei Konnektoren 40, 40' angeordnet. Ein Mikrochip 41 befindet sich in einem anderen Teil des ersten Deckels 23.

Zwischen den Kammern 33, 34, 34' und um die Kammern 33, 34, 34' herum sind Wände bzw. Zwischenwände 38 angeordnet, die mit geeigneten Dichtungsmitteln, beispielsweise O-Ringen, einer Paste oder Ähnlichem, auf der Grundplatine 39 aufliegen, so dass die Spalte zwischen der Grundplatine 39 und den Zwischenwänden 38 gegen den Durchtritt von Mikrowellenstrahlung abgedichtet sind.

Die in den Fig. 2 bis 5 dargestellte erfindungsgemäße Mikrowellenstrangmessvorrichtung 20 ist für den Durchtritt eines Materialstrangs der Tabak verarbeitenden Industrie ausgelegt. Für den Einsatz in einer Zweistrangmaschine ist das Gehäuse der erfindungsgemäßen Mikrowellenstrangmessvorrichtung 20 besonders geeignet.

In einer Zweistrangmaschine werden wenigstens zwei erfindungsgemäße Mikrowellenstrangmessvorrichtungen 20 gemäß den Fig. 2 bis 5 mit jeweils einem Mikrowellengenerator und jeweils einem Mikrowellenresonator für jeweils einen Materialstrang verwendet. Diese Mikrowellenstrangmessvorrichtungen 20 sind bezüglich der Position ihrer Durchtrittsöffnungen 27, 27' asymmetrisch ausgebildet und werden mit ihren jeweils zu der jeweiligen Durchtrittsöffnung 27, 27' benachbarten Längsseiten zueinander angeordnet, so dass die Mittellängsachsen der Durchtrittsöffnungen 27, 27' parallel zueinander liegen. Durch den mehrfachen Einsatz der Mikrowellenstrangmessvorrichtungen 20 können die Herstellungskosten aufgrund der größeren erreichbaren Stückzahl deutlich gesenkt werden. Auch die Inbetriebnahme und Wartung werden standardisiert, womit ebenfalls ein Kostensenkungseffekt einhergeht. Beispielsweise ist bei einem Funktionsausfall der Mikrowellenstrangmessvorrichtung 20 eines Stranges die Mikrowellenstrangmessvorrichtung 20 des anderen Stranges immer noch voll funktionsfähig.

Insbesondere ist für eine Mikrowellenstrangmessvorrichtung 20 in einer Zweistrangmaschine vorgesehen, dass die Position der Durchtrittsöffnung 27, 27' im Gehäuse 21 asymmetrisch und parallel zu zwei Außenseiten des Gehäuses 21 ausgebildet ist, wobei der Abstand der Mittellängsachse der Durchtrittsöffnung 27, 27' zu wenigstens einer parallel verlaufenden Außenseite des Gehäuses 21 gleich oder geringer als der halbe Abstand der Materialstränge ist. Dieser beträgt in einigen Fällen weniger als 24 mm oder sogar weniger als 20 mm.

Der Aufbau des erfindungsgemäßen Systems erlaubt zudem in vorteilhafter Weise den Einsatz als so genanntes Zweifrequenzen-Tandemsystem. Hierbei werden je Materialstrang zwei im Wesentlichen baugleiche Systeme, insbesondere unmittelbar, hintereinander angeordnet, wobei die beiden Systeme bei abweichenden Frequenzen betrieben werden. Die Abweichung beträgt insbesondere einen Faktor 2 oder mehr.

Somit entsteht eine bauraumsparende und kostensparende Lösung, um verschiedene Mess- und/oder Prüfaufgaben zeitgleich oder nahezu zeitgleich zu lösen, beispielsweise Dichte-, Masse- und/oder Feuchtemessung des Materialstrangs, Bestimmung der Masse eines gleichmäßig verteilten eingebundenen flüssigen oder festen Zusatzstoffes und/oder die Erkennung von Fremdkörpern und/oder von in den Materialstrang systematisch eingebrachten Pellets oder Kapseln hinsichtlich der Position, insbesondere bei gleichzeitiger Bestimmung der lokalen Masse beispielsweise der Pellets oder Kapseln.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Maschine
- 2: Strangmaschine
- 3: Filteransetzmaschine
- 4: Verteilereinheit
- 5: Vorverteiler
- 6: Strangförderer
- 7: Umhüllungspapiereinheit
- 8: Formateinheit
- 9: Messvorrichtung
- 10: Messer- und Übergabeeinheit
- 11: Steuerkonsole
- 12: Belagpapiereinheit
- 20: Mikrowellenstrangmessvorrichtung
- 21: Gehäuse
- 22: Grundkörper
- 23: erster Deckel
- 23': Aufnahme
- 24: zweiter Deckel
- 25: Aussparung
- 26: Resonatordeckel
- 27, 27': Strangdurchtrittsöffnung
- 28: Mikrowellenresonator
- 29: Einkopplungsantenne
- 30: Auskopplungsantenne
- 31: Platine für Mikrowellengeneratorelektronik
- 32: Platine für Mess- und Auswerteelektronik
- 33: Kammer für Mikrowellengeneratorelektronik
- 34, 34': Kammer für Mess- und Auswerteelektronik
- 35: Abdeckung
- 36: Kammer für Temperaturregelung
- 37: Kammer für Spannungsversorgung
- 38: Zwischenwand
- 39: Grundplatine
- 40, 40': Konnektor
- 41: Mikrochip
- 42: Schrauben

## Patentansprüche

1. Mikrowellenstrangmessvorrichtung (20) zur Messung von Eigenschaften eines Materialstrangs oder mehrerer Materialstränge der Tabak verarbeitenden Industrie, umfassend ein Gehäuse (21) mit wenigstens einem als Mikrowellenresonator (28) ausgebildeten Innenraum, der durch einen Materialstrang durchsetzbar ist und dem Mikrowellen zuführbar sind, **dadurch gekennzeichnet, dass** eine oder mehrere genauigkeitsbestimmende elektronische Komponenten (31, 32) im Gehäuse (21) angeordnet sind, wobei als genauigkeitsbestimmende elektronische Komponenten (31, 32) wenigstens ein Mikrowellengenerator und/oder wenigstens ein frequenzstabilisierter Oszillator und/oder Signalverarbeitungskomponenten und/oder Messelektronikkomponenten im Gehäuse (21) angeordnet sind, wobei das Gehäuse (21) ein oder mehrere voneinander in Bezug auf Mikrowellenstreufelder abgeschirmte Kammern (33, 34, 34') aufweist, in denen jeweils eine oder mehrere genauigkeitsbestimmende elektronische Messkomponenten (31, 32) angeordnet sind.

2. Mikrowellenstrangmessvorrichtung (20) nach Anspruch 1, **dadurch gekennzeichnet, dass** das Gehäuse (21) einen Grundkörper (22) und einen ersten Deckel (23) umfasst, die zu dem Gehäuse (21) zusammensetzbar sind, wobei insbesondere weiter eine Abdeckung (35) für genauigkeitsbestimmende elektronische Komponenten (31, 32) umfasst ist, die in einer Aufnahme (23') im ersten Deckel (23) angeordnet ist, wobei insbesondere die Kammer (33, 34, 34') oder die Kammern (33, 34, 34') als Aussparungen im ersten Deckel (23) und/oder in der Abdeckung (35) und/oder im Grundkörper (22) ausgebildet ist oder sind, wobei zwischen den Kammern (33, 34, 34') und/oder zwischen der Kammer (33, 34, 34') und dem Mikrowellenresonator (28) Zwischenwände (38) angeordnet sind.

3. Mikrowellenstrangmessvorrichtung (20) nach Anspruch 2, **dadurch gekennzeichnet, dass** die Abdeckung (35) auf wenigstens einer Grundplatine (39) mit elektrischen und/oder elektronischen Bauteilen aufsitzt und die Kammern (33, 34, 34') zwischen der Grundplatine (39) und der Abdeckung (35), dem ersten Deckel (23) und/oder dem Grundkörper (22) ausgebildet ist oder sind.

4. Mikrowellenstrangmessvorrichtung (20) nach Anspruch 2 oder 3, **dadurch gekennzeichnet, dass** Spalte und/oder Freiflächen zwischen den Zwischenwänden (38) im Grundkörper (22) und dem ersten Deckel (23) oder der Abdeckung (35) gegen HF-Strahlung abgedichtet sind, insbesondere mittels einer als HF-Paste aufgetragenen Dichtung, einer HF-Dichtungsschnur oder mittels HF-O-Ringen.

5. Mikrowellenstrangmessvorrichtung (20) nach einem der Ansprüche 2 bis 4, **dadurch gekennzeichnet, dass** der Grundkörper (22) wenigstens eine Kammer (36, 37) aufweist, in der insbesondere eine Spannungsversorgung und/oder eine Temperaturregeleinrichtung angeordnet sind, und/oder eine Temperaturregeleinrichtung am Gehäuse (21) angeordnet ist, wobei mittels der Temperaturregeleinrichtung in oder am Gehäuse (21) die Temperatur des Gehäuses (21) im Wesentlichen auf einem konstanten vorbestimmten oder vorbestimmbaren Wert haltbar ist.

6. Mikrowellenstrangmessvorrichtung (20) nach einem der Ansprüche 1 bis 5, **dadurch gekennzeichnet, dass** im Grundkörper (22) oder im ersten Deckel (23) zwei oder mehr Ebenen von Kammern (33, 34, 34') angeordnet sind.

7. Mikrowellenstrangmessvorrichtung (20) nach einem der Ansprüche 2 bis 6, **dadurch gekennzeichnet, dass** ein Resonatordeckel (25) den Mikrowellenresonator (28), der als Hohlraum im Grundkörper (22) ausgebildet ist, zu einer Seite hin abschließt, wobei insbesondere der Resonatordeckel (25) Teil des zweiten Deckels (24) ist oder in einer Aussparung des zweiten Deckels (24) angeordnet ist.

8. Mikrowellenstrangmessvorrichtung (20) nach einem der Ansprüche 2 bis 5, **dadurch gekennzeichnet, dass** der Grundkörper (22) und der erste Deckel (23), insbesondere auch die Abdeckung (35), insbesondere auch der zweite Deckel (24), ein oder mehrere Materialien mit im Wesentlichen gleicher, insbesondere geringer, Temperaturausdehnung aufweisen, wobei insbesondere ein Temperaturausdehnungskoeffizient des oder der Materialien einen Wert von 25*10⁻⁶ K⁻¹ nicht übersteigt, insbesondere im Wesentlichen kleiner ist als 2,5*10⁻⁶ K⁻¹, insbesondere kleiner als 0,1*10⁻⁶ K⁻¹.

9. Mikrowellenstrangmessvorrichtung (20) nach einem der Ansprüche 1 bis 8, **dadurch gekennzeichnet, dass** das Gehäuse (21) ein gut wärmeleitendes Material aufweist.

10. Mikrowellenstrangmessvorrichtung (20) nach einem der Ansprüche 1 bis 9, **dadurch gekennzeichnet, dass** das Gehäuse (21) im Wesentlichen an mechanisch weichen Verbindungselementen, insbesondere Schrauben (42), Bolzen oder Stehbolzen, aufgehängt ist, die thermische und/oder mechanische Verspannungen aufnehmen, um Verformungen des Gehäuses (21) zu minimieren.

11. Mikrowellenstrangmessvorrichtung (20) nach einem der Ansprüche 1 bis 10, **dadurch gekennzeichnet, dass** ein Schutzrohr aus einem nichtleitenden Material, insbesondere Kunststoff, insbesondere PEEK, durch den der Materialstrang durch den Mikrowellenresonator (28) führbar ist, innerhalb der Messzone und/oder im Gehäuse (21) eine geringe Wandstärke aufweist als außerhalb des Gehäuses (21) und/oder im Gehäuse (21) enger toleriert ist als außerhalb des Gehäuses (21).

12. Mikrowellenstrangmessvorrichtung (20) nach einem der Ansprüche 1 bis 11, **dadurch gekennzeichnet, dass** Messsonden (29, 30), die in den Mikrowellenresonator hineinragen, in nichtleitenden Röhren oder Hülsen gelagert sind, die Mikrowellen durchlassend ausgebildet sind und an einer oder beiden Endflächen des Mikrowellenresonators (28) an jeweils festen Positionen gelagert sind.

13. Mikrowellenstrangmessvorrichtung (20) nach einem der Ansprüche 1 bis 12, **dadurch gekennzeichnet, dass** eine Position einer Durchtrittsöffnung (27, 27') für den Materialstrang im Gehäuse (21) asymmetrisch und parallel zu zwei Außenseiten des Gehäuses (21) ausgebildet ist, wobei insbesondere der Abstand der Mittellängsachse der Durchtrittsöffnung (27, 27') zu wenigstens einer Außenseite des Gehäuses (21) weniger als 24 mm, insbesondere weniger als 20 mm beträgt.

14. Maschine (1) der Tabak verarbeitenden Industrie, insbesondere Strangmaschine (2), insbesondere Tabakstrangmaschine oder Filterstrangmaschine, mit wenigstens einer Mikrowellenstrangmessvorrichtung (20) nach einem der Ansprüche 1 bis 13.

15. Maschine (1) nach Anspruch 14, **dadurch gekennzeichnet, dass** die Maschine (1) wenigstens zwei Mikrowellenstrangmessvorrichtungen (20) aufweist, wobei die Mikrowellenstrangmessvorrichtungen (20) unmittelbar hintereinander angeordnet sind und die Durchtrittsöffnungen (27, 27') der Mikrowellenstrangmessvorrichtungen (20) für den Materialstrang fluchtend zueinander ausgerichtet sind, wobei die Betriebsfrequenzen der beiden Mikrowellenstrangmessvorrichtungen (20) voneinander abweichen, insbesondere um wenigstens einen Faktor 2, oder wobei die Mikrowellenstrangmessvorrichtungen (20) im Wesentlichen unmittelbar nebeneinander angeordnet sind und die Durchtrittsöffnungen (27, 27') der Mikrowellenstrangmessvorrichtungen (20) für zwei Materialstränge parallel zueinander ausgerichtet sind und in einer, insbesondere horizontalen, Ebene angeordnet sind, wobei insbesondere die wenigstens zwei Mikrowellenstrangmessvorrichtungen (20) mit derselben Frequenz betrieben werden.

16. Maschine (1) nach Anspruch 14 oder 15, **dadurch gekennzeichnet, dass** die Maschine (1) zur Herstellung von zwei Materialsträngen ausgebildet ist und vier Mikrowellenstrangmessvorrichtungen (20) aufweist, wobei an jedem Materialstrang jeweils zwei Mikrowellenstrangmessvorrichtungen (20) unmittelbar hintereinander angeordnet sind und die Durchtrittsöffnungen (27, 27') der Mikrowellenstrangmessvorrichtungen (20) für den jeweiligen Materialstrang fluchtend zueinander ausgerichtet sind, wobei jeweils die Betriebsfrequenzen der beiden Mikrowellenstrangmessvorrichtungen (20) an jeweils einem Materialstrang voneinander abweichen, insbesondere um wenigstens einen Faktor 2.
